# EUROPEAN PATENT SPECIFICATION

(11) **EP 4 341 126 B1**
(45) Date of publication and mention of the grant of the patent: **28.10.2026**
(21) Application number: 22729569.8
(22) Date of filing: 17.05.2022
(51) Int. Cl.: B60N 2/90

(54) **CLAMPING HOOK STRUCTURE AND SEATING DEVICE CLAMPING INCLUDING THE SAME**
KLEMMHAKENSTRUKTUR UND SITZVORRICHTUNGSKLEMMUNG DAMIT
STRUCTURE DE CROCHET DE SERRAGE ET SERRAGE DE DISPOSITIF D'ASSISE LA COMPRENANT

(30) Priority: 17.05.2021 CN 202110533326
(43) Date of publication of application: 27.03.2024
(73) Proprietor: Bambino Prezioso Switzerland AG, 6312 Steinhausen (CH)
(72) Inventor: CHEN, Yingzhong, Dongguan, Guangdong 523000 (CN)
(74) Representative: Pfenning, Meinig & Partner mbB
(86) International application number: PCT/EP2022/063356
(87) International publication number: WO 2022/243335

(56) References cited:
- WO-A1-2020/177387
- WO-A1-2020/177387
- WO-A1-2022/123048
- CN-B- 103 568 893

## Description

### TECHNICAL FIELD

The present invention relates to a clamping hook structure and a seating device including the clamping hook structure.

### BACKGROUND

Seating devices such as child car seats and carrycots are common devices which can be seated and arranged for infants and toddlers of different ages. The child car seat is designed for safety of children, it can restrain dangerous behavior of a child in the car during travelling, and protect the child from injury in event of a sudden collision of the car and other unexpected events.

The child car seat can be designed to be detachable, including a base fixed on the car and a seat mounted on the base. For the fixed structure between the base and the seat, it is expected to have a performance of easy operation, safety and stability. In most clamping structures of the existing child car seat and the base, an elastic member structure is arranged on a clamping hook of the base to bias it to a locked position or an unlocked position. Such structure may result in accidental release of the clamping hook in the event of slight collisions and bumps on the on the seat, causing the seat to separate from the base. Document WO 2020/177387 A1 relates to a side pushing base hook releasing structure. Further prior art can be found in document CN 103 568 893 B.

### SUMMARY

The invention is defined by the claims. According to this application, a clamping hook structure for assembling and connecting a base to a crossbar is provided, the clamping hook structure comprises: a bracket, fixed to the base, having two opposite side walls; a clamping hook, pivotally connected to the bracket through a clamping hook pivot set up between the two side walls, so as to be pivoted between a locked position and an unlocked position, the clamping hook has a protruding first hook portion and an engaging portion located between the first hook portion and the clamping hook pivot, when the clamping hook is in the locked position or the unlocked position, the first hook portion fixes or releases the crossbar; and a first elastic member, one end of the first elastic member is fixed to the bracket, and the other end of the first elastic member is fixed to the engaging portion, thus being able to be displaced between the locked position and the unlocked position as the clamping hook is pivoted.

According to the application, a seating device is provided, the seating device includes: a base, fixed to a car; a seating portion, detachably fixed to the base; a rear crossbar, disposed on one of the base and the seating portion; a rear clamping hook structure, respectively disposed on the other of the base and the seating portion, and capable of engaging with the rear crossbar; wherein the rear clamping hook structure is the clamping hook structure according to the application, and the crossbar is the rear crossbar.

### BRIEF DESCRIPTION OF THE DRAWINGS

Embodiments of the present application will be specifically described below in conjunction with the accompanying drawings, in which:
Fig. 1A is a perspective view of a seating device according to one embodiment of the application, wherein the seating portion is a seat;
Fig. 1B is a perspective view of a seating device according to another embodiment of the application, wherein the seating portion is a carrycot;
Fig. 2 is a perspective view showing a relationship among a base, a crossbar, and a clamping hook structure of the seating device;
Fig. 3A is a perspective view showing a relationship among the base, the crossbar, and the clamping hook structure of the seating device, wherein an upper case is removed in order to show a specific structure inside the case;
Fig. 3B is an enlarged view of a clamping hook structure in Fig. 3A;
Fig. 3C is a perspective view of showing the relationship among the base, the crossbar, and the clamping hook structure of the seating device from another angle, wherein the upper case is removed in order to show the specific structure inside the case;
Fig. 3D is an enlarged view of the clamping hook structure in Fig. 3C;
Fig. 4 is a side view of a bracket in the clamping hook structure;
Fig. 5 is a side view of a clamping hook in the clamping hook structure;
Fig. 6 is a side view of a clamping member in the clamping hook structure;
Fig. 7A is a side view showing the clamping hook structure in a locked state;
Fig. 7B is an enlarged view of the clamping hook structure in Fig. 7A, wherein a first elastic member is located on one side of a pivoting axis of the clamping hook;
Fig. 8Ais a side view showing the clamping hook structure in an unlocked state;
Fig. 8B is an enlarged view of the clamping hook structure in Fig. 8A, wherein the first elastic member is located on the other side of the pivoting axis of the clamping hook;
Fig. 9A is a side view of the clamping hook structure and a front clamping hook structure according to the application in a locked state, wherein the front clamping hook structure is shown in a cross-sectional view;
Fig. 9B is an enlarged view of the front clamping hook structure in Fig. 9A;
Fig. 10A is a side view of the clamping hook structure and the front clamping hook structure according to the application in a state where a sliding member is displaced by a slight collision, wherein the front clamping hook structure is shown in a cross-sectional view;
Fig. 10B is an enlarged view of the front clamping hook structure in Fig. 10A;
Fig. 10C is an enlarged partial view of Fig. 10A, wherein a portion of the base is removed in order to more clearly show the remaining components;
Fig. 10D is an enlarged partial view of Fig. 10A, wherein a portion of the base and a side wall of the bracket are removed in order to more clearly show the remaining components;
Fig. 11A is a side view of the clamping hook structure and the front clamping hook structure according to the application in an unlocked state, wherein the front clamping hook structure is shown in a cross-sectional view;
Fig. 11B is an enlarged view of the front clamping hook structure in Fig. 11A;
Fig. 11C is an enlarged partial view of Fig. 11A, wherein a portion of the base is removed in order to more clearly show the remaining components;
Fig. 11D is an enlarged partial view of Fig. 11A, wherein a portion of the base and a side wall of the bracket are removed in order to more clearly show the remaining components;
Fig. 12 is an enlarged partial view of the clamping hook structure according to another embodiment of the application, wherein a third elastic member arranged on a clamping hook pivot is shown.

### DETAILED DESCRIPTION

Although the application is illustrated and described herein with reference to specific embodiments, the application should not be limited to the shown details. Specifically, various modifications may be made in these details within the scope of equivalents of the claims and without departing from the application.

The direction descriptions such as "front," "rear," "up," and "down" involved in this document are only for the convenience of understanding, and the disclosure is not limited to these directions, but can be adjusted according to actual situation.

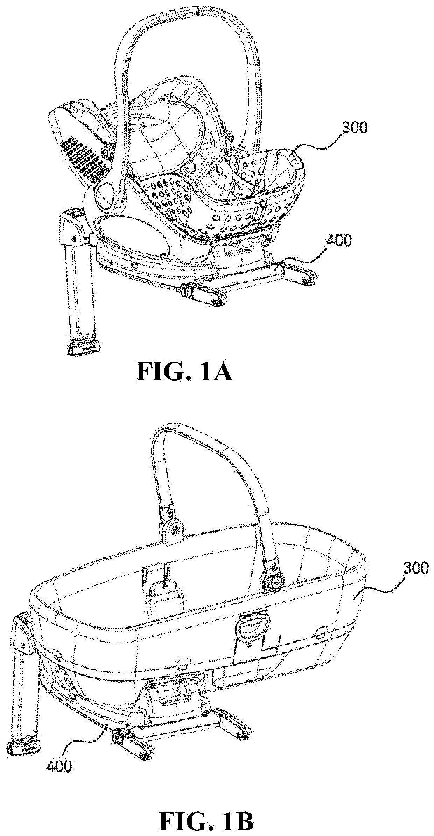

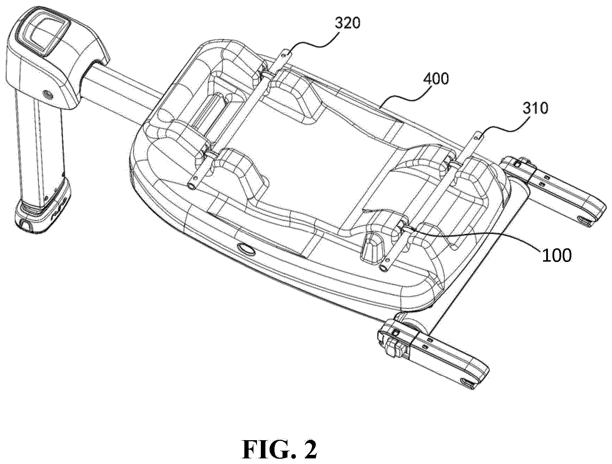

Firstly, the seating device according to the application will be generally described by referring to Figs. 1A- 2. Fig. 1A is a perspective view of a seating device according to one embodiment of the application, wherein the seating portion 300 is a child car seat; Fig. 1B is a perspective view of a seating device according to another embodiment of the application, wherein the seating portion 300 is a carrycot; Fig. 2 is a perspective view showing a relationship among a base 400, crossbars (front crossbar 310 and rear cross bar 320), and a clamping hook structure 100 of the seating device.

As shown, the seating device may be divided into a base 400 and a seating portion 300, wherein the seating portion 300 may be a seat or a carrycot. The seating portion 300 may be arranged to be engaged on the base 400 in a longitudinal direction (advancing direction of the vehicle), such as the engagement shown in Fig. 1A. At this time, the child in the seating portion 300 faces substantially in the advancing direction of the vehicle. The seating portion 300 may also be arranged to be transversally engaged on the base 400, such as the engagement shown in Fig. 1B. At this time, the child in the seating portion 300 is lying in the carrycot with his body substantially transverse to the advancing direction of the vehicle.

The seating portion 300 may be engaged to the base 400 or detached from the base 400. Engagement between the seating portion 300 and the base 400 is achieved through the crossbars (front crossbar 310 and rear cross bar 320) and the clamping hook structure 100. In the embodiment shown in Fig. 2, the crossbars are mounted to a bottom of the seating portion 300 (the seating portion is not shown), and the clamping hook structure is mounted to the base 400. The clamping hook in the clamping hook structure 100 can hook or release the crossbars, thereby engaging the seating portion 300 to the base 400 or removing the seating portion 300 from the base 400. It should be understood, in other embodiments, the crossbars may also be mounted to the base 400, and the clamping hook structure 100 may also be mounted to the seating portion 300. In the embodiment shown in Fig. 2, the clamping hook structure 100 is provided by two respectively along extending directions of the crossbars. It should be understood, in other embodiments, the clamping hook structure 100 may also be provided as single or more than two along the extending direction(s) of the cross bar(s).

The crossbars are provided by two side by side along the advancing direction of the vehicle, and are respectively referred to as a front crossbar 320 and a rear crossbar 310. In the application, the clamping hook structure for engaging the front crossbar 320 and the rear crossbar 310 have different configurations. In the following, the term "clamping hook structure" specifically refers to the clamping hook structure 100 for engaging the rear crossbar 310(i.e., the clamping hook structure), and for sake of distinction, the clamping hook structure for engaging the front crossbar 320 is referred to as the "front clamping hook structure 200."

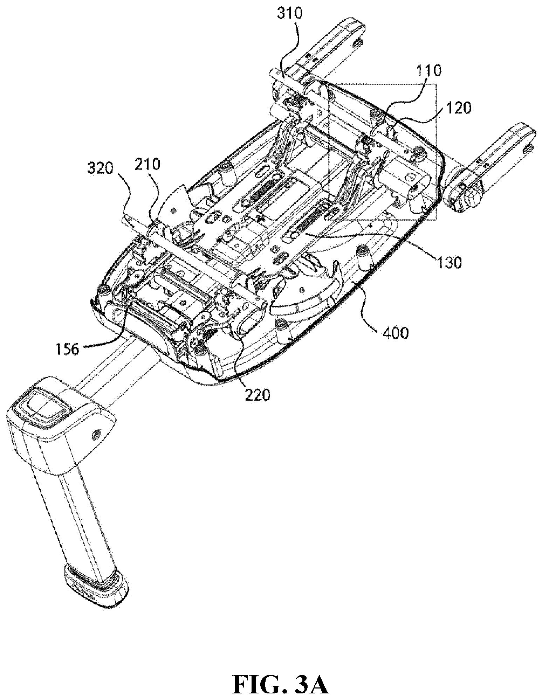

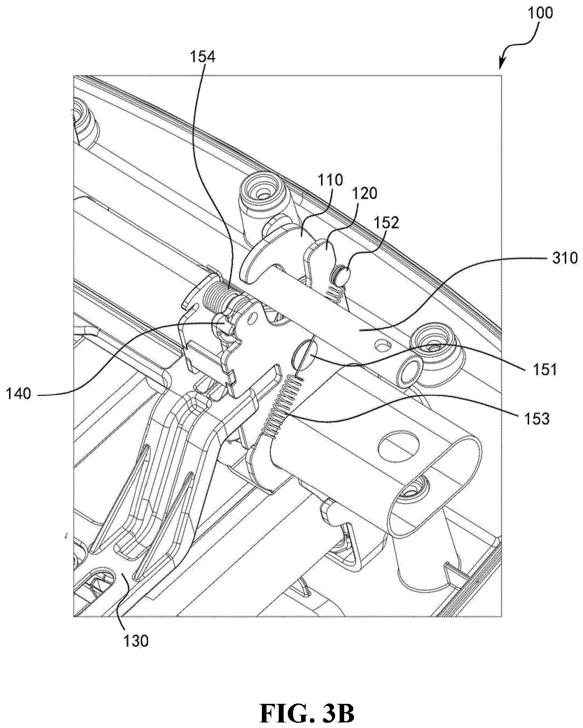

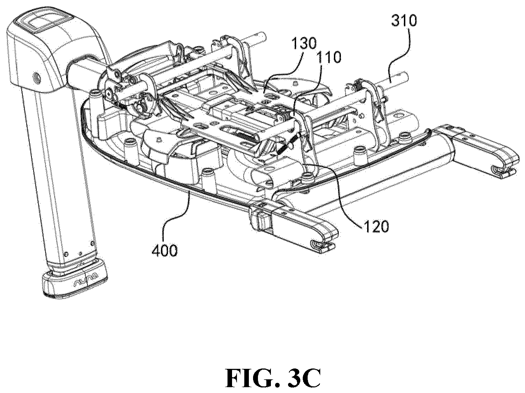

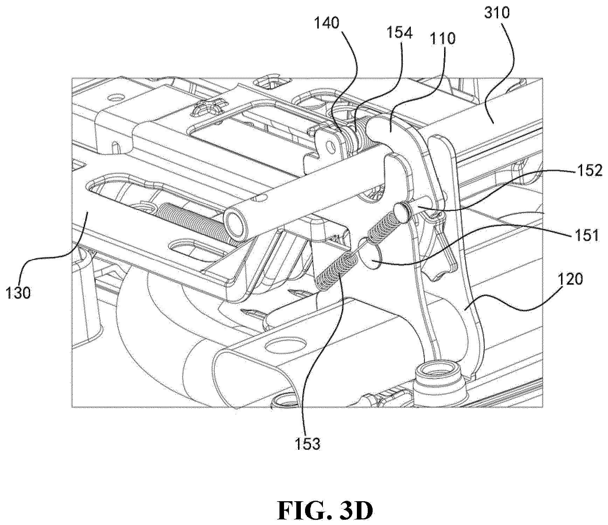

Referring now to Figs. 3A-3D, wherein the specific structure of the clamping hook structure 100 and its engagement with the rear crossbar 310 are shown. Fig. 3A is a perspective view showing a relationship among the base 400, the rear crossbar 310, and the clamping hook structure 100 of the seating device, wherein an upper case is removed in order to show the specific structure inside the case; Fig. 3B is an enlarged view of the clamping hook structure 100 in Fig. 3A; Fig. 3C is a perspective view of showing the relationship among the base 400, the rear crossbar 310, and the clamping hook structure 100 of the seating device from another angle, wherein the upper case is removed in order to show the specific structure inside the case; Fig. 3D is an enlarged view of the clamping hook structure 100 in Fig. 3C.

As shown, the clamping hook structure 100 includes a bracket 120, a clamping hook 110, a clamping member 140, and a sliding member 130, and further includes a clamping hook pivot 151, a pin 152, a first elastic member 153, and a second elastic member 154. The bracket 120 is fixed to the base 400, so as to mount other components of the clamping hook structure 100. The clamping hook 110 is pivotally mounted to the bracket 120, so as to provide a locking function of the clamping hook structure 100. The clamping member 140 is also pivotally mounted to the bracket 120, and its function is to clamp the clamping hook 110 to the unlocked position. The clamping hook pivot 151 is arranged on the bracket 120, so as to provide a pivoting function of the clamping hook 110. The pin 152 is inserted on the clamping hook 110 along an extending direction of the rear crossbar 310. The first elastic member 153 is arranged between the bracket 120 and the clamping hook 110 for biasing the clamping hook 110 to the locked position or unlocked position. The second elastic member 154 is arranged between the bracket 120 and the clamping member 140 for biasing the clamping member 140 to a clamped position. These components will be described in detail below.

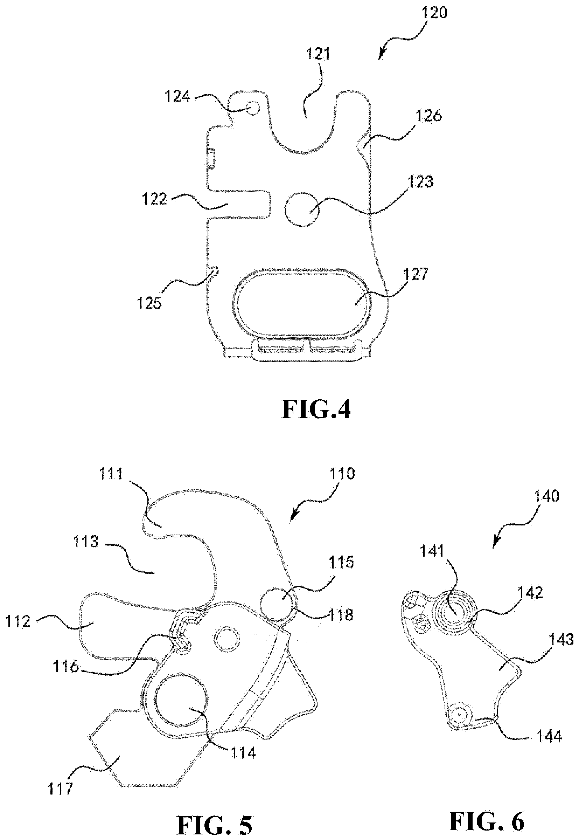

Fig. 4 is a side view of the bracket 120 in the clamping hook structure 100. The bracket 120 has two side walls of substantially the same shape and opposite to each other. In the shown embodiment, the sidewalls are generally rectangular, however it should be understood, in other embodiments, the side walls may have different bonding profiles. There is an arc-shaped groove 121 at upper edges of the side walls for receiving the crossbars. When the crossbars are located in the groove 121 of the side walls and the clamping hook 110 hooks the crossbars, the crossbars are stably engaged to the clamping hook structure 100. The side walls are provided with a clamping hook pivot mounting hole 123 and a clamping member pivot mounting hole 124, such that the clamping hook pivot 151 and a clamping member pivot (not shown) may be mounted between the two side walls. A lower part of each of the side walls has a bracket fixing portion 127, which is an elongated through hole in this embodiment. One side of each of the side walls (e.g., the left side of the side wall in Fig. 4) is provided with a first elastic member fixing portion 125, which is arranged as a depression on the edge of the side wall, and an end of the first elastic member 153 is fixed in the depression. That is, the first elastic member 153 is fixed to at least one of the side walls of the bracket 120. The one side of each of the side walls (e.g., the left side of the side wall in Fig. 4) is further provided with a sliding member accommodating portion 122, which is provided as a rectangular opening, and an end of the sliding member 130 may be inserted into the sliding member accommodating portion 122, so as to position and limit the sliding member 130. The other side of each of the side walls (e.g., the right side of the side wall in Fig. 4) is provided with a pin avoidance portion 126, such that moving of the pin 152 with pivoting of the clamping hook 110 is not interfered by the side walls of the bracket 120.

Fig. 5 is a side view of the clamping hook 110 in the clamping hook structure 100. In this embodiment, one end of the clamping hook 110 is a protruding first hook portion 111, and the other end is a protruding foot portion 117. A middle of the clamping hook 110 is provided with a clamping hook pivoting hole, such that the clamping hook pivot 151 may be inserted therein. An engaging portion (i.e., elastic member engaging portion)118 is disposed between the first hook portion 111 and the clamping hook pivot hole 114, and the other end of the first elastic member 153 is fixed to the engaging portion 118. The clamping hook 110 further has a second hook portion 112. The second hook portion 112 is located between the clamping hook pivot 151 and the first hook portion 111, and has the same axial position in respect to the clamping hook pivot 151 as the first hook portion 111, and protrudes forward longer than the first hook portion 111 and forms with the first hook portion 111 a generally C-shaped accommodating portion (crossbar accommodating portion) 113 for accommodating the crossbar. A clamping hook abutting portion 116 is formed in the middle of the clamping hook 110, and the clamping hook abutting portion 116 extends in the thickness direction of the clamping hook 110 (i.e., axial direction of the clamping hook pivot 151), thus the clamping hook abutting portion 116 is in a different axial portion from that of the first hook portion 111, the second hook portion 112, the foot portion 117, and the engaging portion 118. The clamping hook abutting portion 116 is formed with an abutting surface facing forward. In this embodiment, a pin hole 115 is formed in the engaging portion 118. The first elastic member 153 is fixed to the clamping hook 110 by inserting the pin 152 into the pin hole 115 and fixing the other end of the first elastic member 153 (i.e., the end opposite to the end fixed to the first elastic member fixing portion 125 of the bracket 120) to the pin 152. While in other embodiments, the other end of the first elastic member 153 may also be fixed to the engaging portion 118 by other means.

Fig. 6 is a side view of the clamping member 140 in the clamping hook structure 100. The clamping member 140 has a pivot end 142 and a free end 143, wherein the pivot end 142 is pivotally connected to the bracket 120 through the clamping member pivot (not shown) in a clamping member pivot hole 141, and the pivot of the clamping member is parallel to the clamping hook pivot 151. The free end 143 of the clamping member 140 can be rotated around the pivot end 142. The free end 143 is provided with a clamping member abutting portion 144, which is formed as an abutting surface on a side of the clamping member 140. When the clamping member 140 is pivoted to its clamped position (will be described in detail below), the abutting surface at the clamping member abutting portion 144 of the clamping member 140 abuts against the abutting surface at the clamping hook abutting portion 116 of the clamping hook 110, thereby clamping the clamping hook 110 to the unlocked position.

The first elastic member 153 is arranged to always apply a pulling force to the clamping hook 110. In this embodiment, the first elastic member 153 is a tension spring, moreover, it should be understood, in other embodiments, the first elastic member 153 may be other elastic members capable of exerting tensile force.

The second elastic member 154 is arranged to bias the clamping member 140 to the clamped position. In this embodiment, the second elastic member 154 is a torsion spring disposed on the clamping member pivot, with one end abutting against the bracket 120 and the other end abutting against the clamping member 140. In other embodiments, the second elastic member 154 may also be an elastic member of other forms.

The sliding member 130 is arranged to slide along the base 400. One end of the sliding member 130 extends out of the dragging portion 131, and the other end of the sliding member 130 is connected to an operating member 156. The dragging portion 131 protrudes between the two side walls of the bracket 120, and the operating member 156 is formed as a handle transverse to the sliding member 130. The user can contact the operating member 156 from the outside of the base 400 in order to pull the sliding member 130. The dragging portion 131 is coupled to the foot portion 117 of the clamping hook 110 through a sliding slot or the like, such that when the sliding member 130 moves forward, it can bring the clamping hook 110 to rotate to the unlocked position.

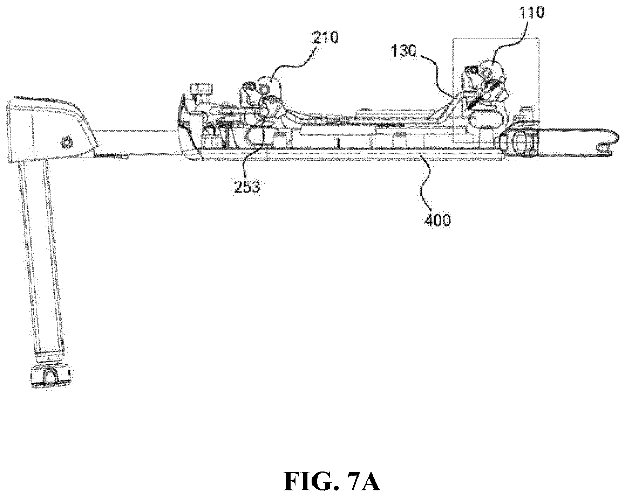

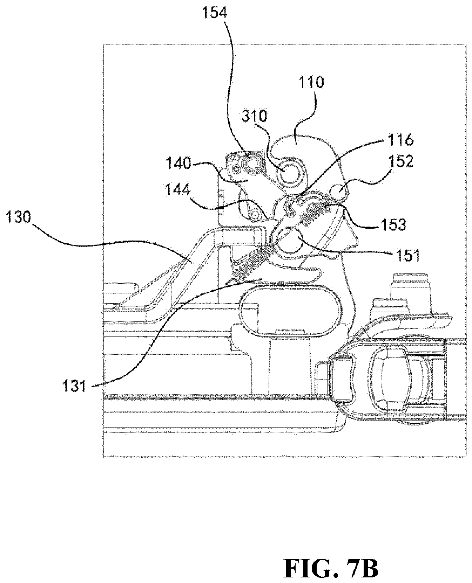

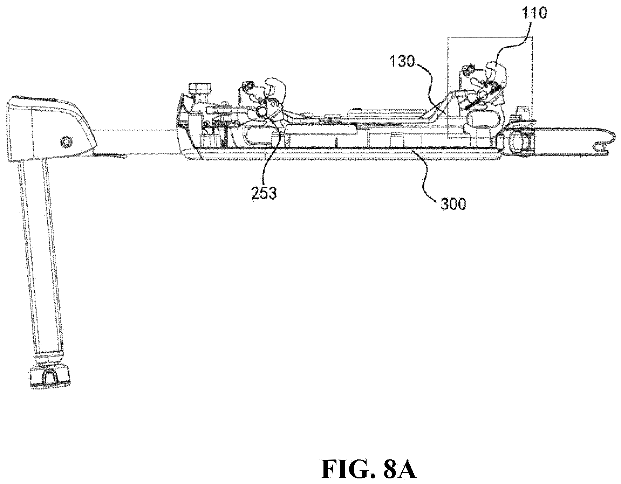

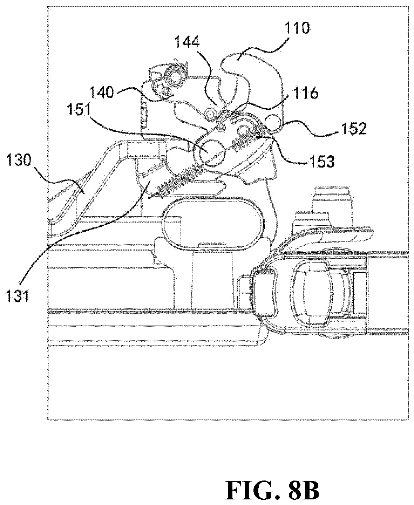

The operation of the clamping hook 110 according to the application will be described below by referring to Figs. 7A-8B. Fig. 7A is a side view of the clamping hook structure 100 in a locked state; Fig. 7B is an enlarged view of the clamping hook structure 100 in Fig. 7A, wherein the first elastic member 153 is located on one side of the pivoting axis of the clamping hook 110; Fig. 8A is a side view of the clamping hook structure 100 in an unlocked state; and Fig. 8B is an enlarged view of the clamping hook structure 100 in Fig. 8A, wherein the first elastic member 153 is located on the other side of the pivoting axis of the clamping hook 110.

In the locked state shown in Fig. 7A-7B, the clamping hook 110 is in the locked position, and hooks the rear crossbar 310 to lock the rear crossbar 310 between the clamping hook 110 and the bracket 120. Since the first elastic member 153 is connected between the first elastic member fixing portion 125 of the bracket 120 and the engaging portion 118 of the clamping hook 110, as the clamping hook 110 rotates around its pivoting axis, the first elastic member 153 also changes its position accordingly, such that it can be located on either sides of the pivoting axis. When pivoted to close or reach the locked position, the first elastic member 153 is located on the side of the pivoting axis close to crossbar. In this way, the force exerted by the first elastic member 153 pulling the clamping hook 110 toward the bracket 120 will drive the clamping hook 110 to rotate to its locked position, that is, an automatic locking is achieved. As shown, the pivoting axis of the clamping hook 110 is the axis of the clamping hook pivot 151.

At this time, the clamping member 140 is in its non-clamped position, and the clamping member abutting portion 144 is not in contact with the clamping hook abutting portion 116. Although the second elastic member 154 located between the clamping member 140 and the bracket 120 tends to bias the clamping member 140 to the clamped position, the crossbar presses on the free end 143 of the clamping member 140 at this time, preventing the clamping member 140 from rotating to the clamped position.

In order to make the clamping hook structure 100 reach the unlocked position shown in Figs. 8A-8B, the user may pull the sliding member 130 forward, specifically, pulling the operating member 156 connected to the sliding member 130, such that the sliding member 130 brings the clamping hook 110 to rotate to the unlocked position. During this process, the position of the first elastic member 153 changes accordingly, moving from the side of the pivoting axis of the clamping hook 110 close to the crossbar to the side away from the crossbar by across the pivoting axis, i.e., passing a "dead point" of the clamping hook 110. After passing the dead point, the biasing force of the first elastic member 153 pulling the clamping hook 110 toward the bracket 120 will drive the clamping hook 110 to rotate to its unlocked position, that is, the automatic unlocking is realized.

After the clamping hook 110 reaches its unlocked position, the crossbar is no longer locked in the clamping hook structure 100, and the user can then remove the seating device from the base 400, and thus also remove the crossbar. In this way, the clamping member 140 is no longer subjected to the pressure of the crossbar, and will rotate to its clamped position under biasing of the second elastic member 154. At this time, the clamping member abutting portion 144 of the clamping member 140 contacts the clamping hook abutting portion 116 of the clamping hook 110, preventing the clamping hook 110 from returning to the locked position, thus preventing the clamping hook 110 from being accidentally locked. It should be noted, at this time, the second hook portion 112 of the clamping hook 110 and the free end 143 of the clamping member 140 both are at least partially located in the groove 121 of the bracket 120.

In order to make the clamping hook structure 100 return from the unlocked position shown in Figs. 8A-8B to the locked position shown in Figs. 7A-7B, the user may mount the seating device to the base 400, that is, to press the crossbar into the groove 121 of the bracket 120. At this time, the crossbar presses the second hook portion 112 of the clamping hook 110 and the free end 143 of the clamping member 140 down, forcing the clamping hook 110 to return to the locked position and the clamping member 140 to return to the non-clamped position.

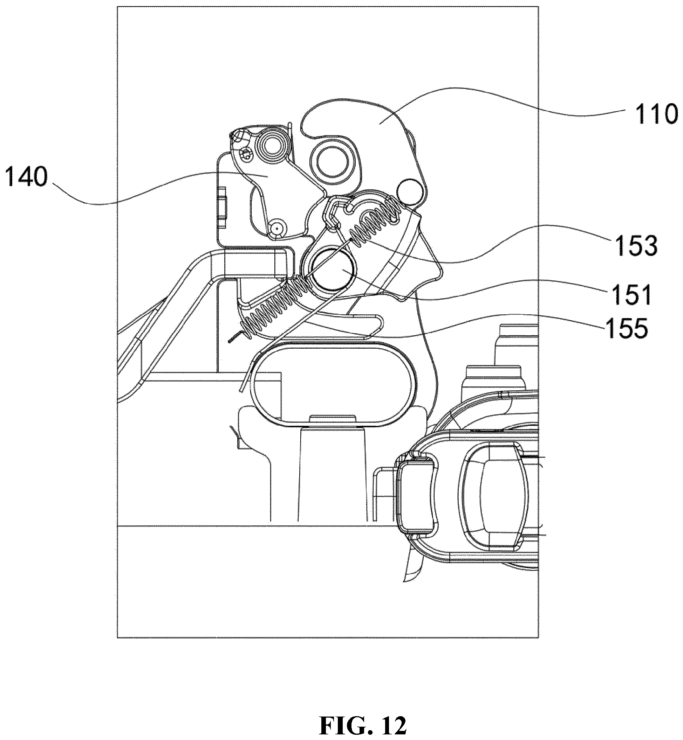

In an embodiment, the clamping hook pivot 151 may be further provided with a third elastic member 155, and the third elastic member 155 may be in the form of, for example, a torsion spring biasing the clamping hook 110 to the unlocked position. Referring to Fig. 12, the third elastic member 155 arranged on the clamping hook pivot 151 is shown.

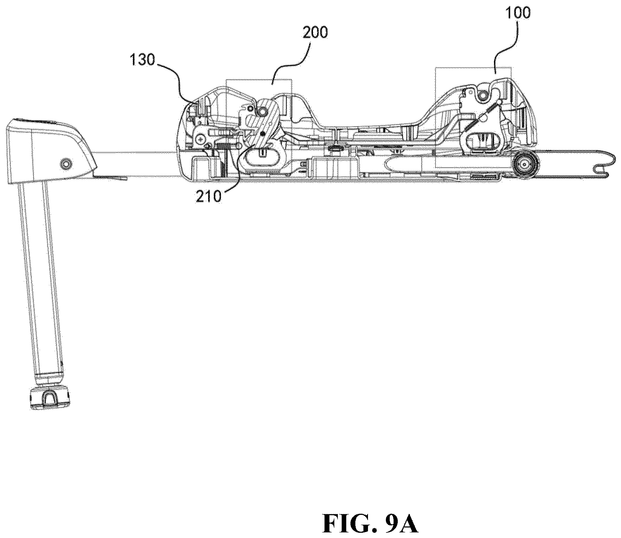

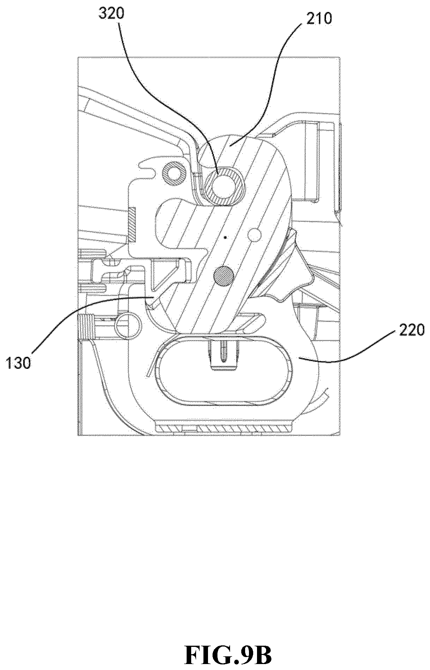

The front clamping hook structure 200 of the application will now be described by referring to Figs. 9A-9B. Fig. 9A is a side view of the clamping hook structure 100 and the front clamping hook structure 200 according to the application in the locked state, wherein the front clamping hook structure 200 is shown in a cross-sectional view; and Fig. 9B is an enlarged view of the front clamping hook structure 200 in Fig. 9A. The front clamping hook structure 200 is substantially as same as the clamping hook structure 100, so only the differences between them will be described below.

The front clamping hook structure 200 has a front clamping hook 210 and a front bracket 220, as well as a fourth elastic member 253 disposed between the front clamping hook 210 and the front bracket 220 (see Figs. 7A and 8A). Unlike the first elastic member 153 disposed between the clamping hook 110 and the bracket 120, which can bias the clamping hook 110 to the locked position or the unlocked position as the clamping hook 110 rotates, the fourth elastic member 253 always biases the front clamping hook 210 to the unlocked position. In this embodiment, the fourth elastic member 253 is a torsion spring disposed on a pivoting shaft of the front clamping hook 210. In other embodiments, the fourth elastic member 253 may also be provided as an elastic member in other form.

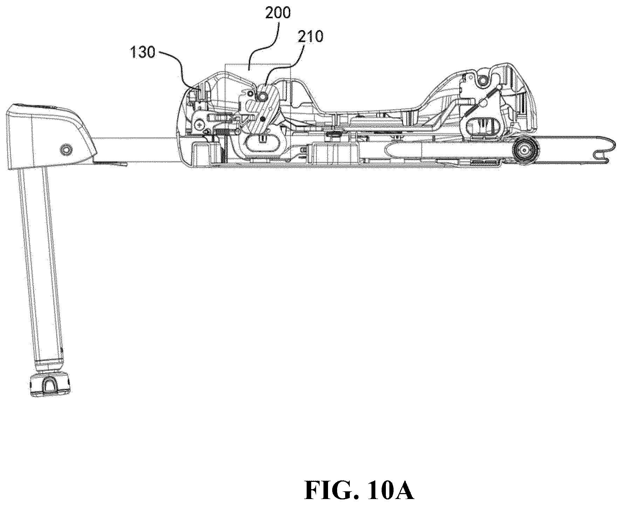

The operation of the seating device according to the application will be described below by referring to Figs. 10A-Fig. 11D.

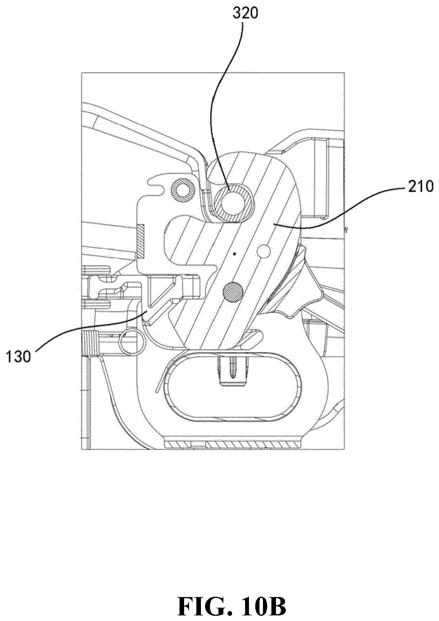

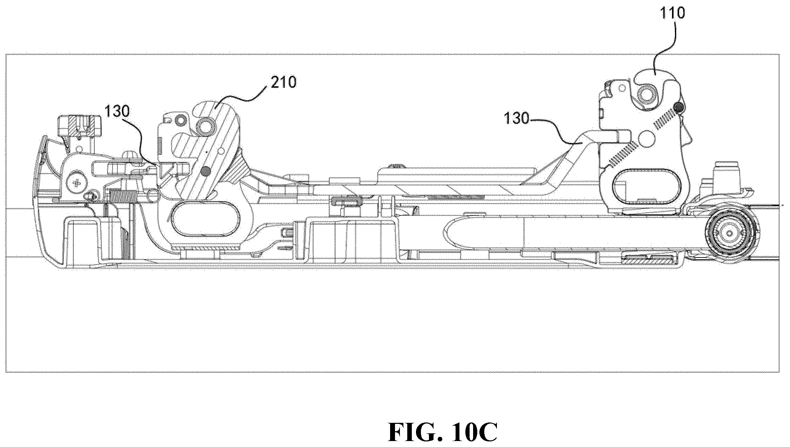

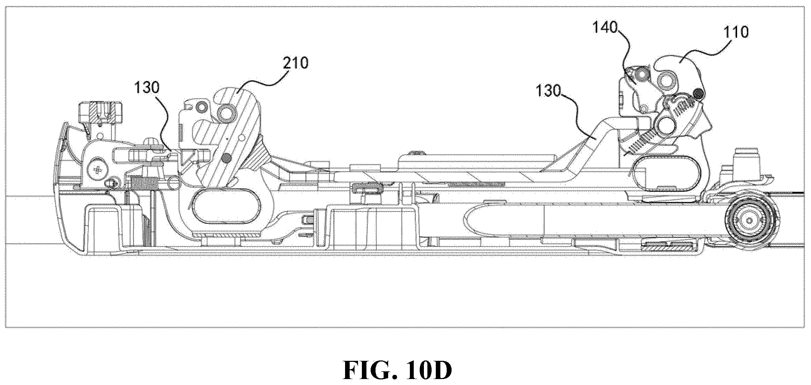

Fig. 10A is a side view of the clamping hook structure 100 and the front clamping hook structure 200 according to the application in a state where the sliding member 130 is displaced by a slight collision, wherein the front clamping hook structure 200 is shown in a cross-sectional view; Fig. 10B is an enlarged view of the front clamping hook structure 200 in Fig. 10A; Fig. 10C is an enlarged partial view of Fig. 10A, wherein a portion of the base 400 is removed in order to more clearly show the remaining components; and Fig. 10D is an enlarged partial view of Fig. 10C, wherein a portion of the base 400 and a side wall of the bracket 120 are removed in order to more clearly show the remaining components.

When subjected to an impact force, the seating portion 300 may tend to move forward, specifically, if the seating portion 300 is a seat, it will fall forward, and if the seating portion 300 is a carrycot it will turn forward. Therefore, the front clamping hook will be subjected to a downward pressure, while the rear clamping hook will not be subjected to pressure.

When subjected to an impact force, the sliding member 130 will slide forward, however, since the front clamping hook 210 is pressed by the crossbar, the front clamping hook 210 will not rotate to its unlocked position, and meanwhile, the sliding member 130 will be prevented from being completely disengaged from clamping with the front clamping hook 210. At the same time, since the first elastic member 153 in the rear clamping hook structure 100 tends to bias the clamping hook 110 to the locked position, the rear clamping hook is always in the locked state, so as to prevent the rear crossbar 310 from being separated.

In this way, even if the seating device is subjected to a certain collision, the seating portion 300 will not be separated from the base 400, thereby ensuring safety of the child in the seating portion 300.

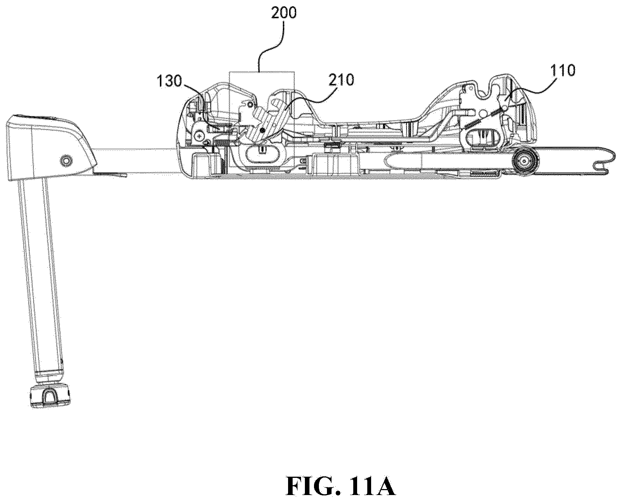

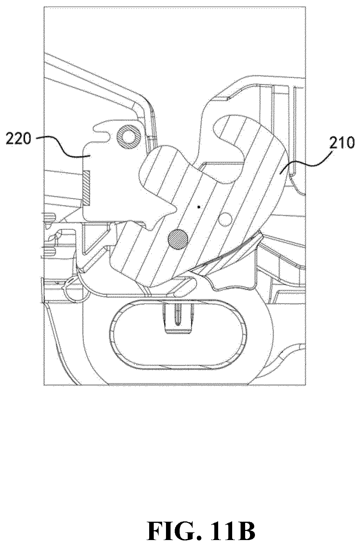

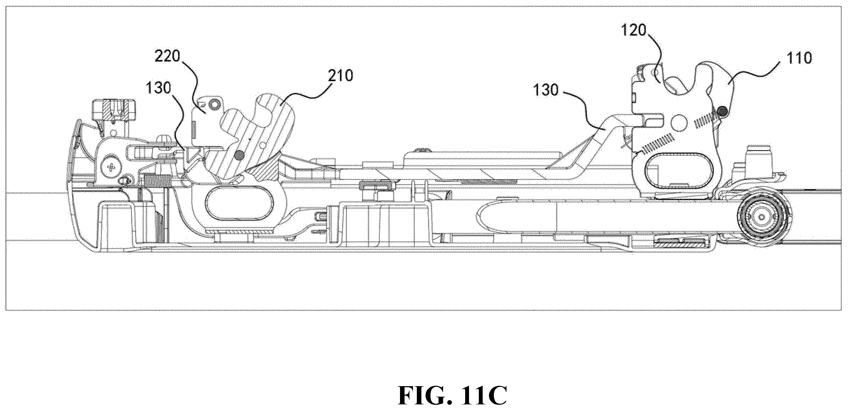

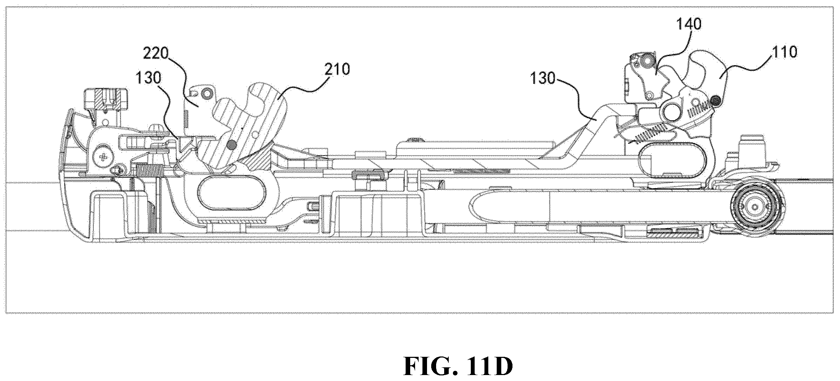

Fig. 11A is a side view of the clamping hook structure 100 and the front clamping hook structure 200 according to the application in unlocked state, wherein the front clamping hook structure 200 is shown in a cross-sectional view; Fig. 11B is an enlarged view of the front clamping hook structure 200 in Fig. 11A; Fig. 11C is an enlarged partial view of Fig. 11A, wherein a portion of the base 400 is removed in order to more clearly show the remaining components; and Fig. 11D is an enlarged partial view of Fig. 11A, wherein a portion of the base 400 and a side wall of the bracket 120 are removed in order to more clearly show the remaining components.

In the unlocked state, as described above, the first elastic member 153 in the rear clamping hook structure biases the clamping hook 110 to the unlocked position, and at the same time, the clamping member 140 clamps the clamping hook 110 to the unlocked position, so as to prevent the clamping hook 110 from being accidentally locked. Similarly, the fourth elastic member 253 in the front clamping hook structure 200 biases the front clamping hook 210 to the unlocked position, while the front clamping member 140 (not shown) clamps the front clamping hook 210 to unlocked position, so as to prevent the front clamping hook 210 from being accidentally locked. In this way, unless the user mounts the seating device to the base 400, and at the same time presses the crossbar into the clamping hook structure 100 and the front clamping hook structure 200, the clamping hook structure 100 and the front clamping hook structure 200 will not be accidentally switched to the locked state.

In an embodiment, the first elastic member 153 is a tension spring fixed to at least one of the side walls of the bracket 120.

In an embodiment, the two side walls of the bracket 120 are symmetrically arranged with each other, and a top of each side wall has a groove 121 opening upwards for accommodating the crossbar.

In an embodiment, the clamping hook structure 100 further comprises: a clamping member 140, having a pivot end 142 and a free end 143, the pivot end 142 is pivotally connected to the bracket 120 through a clamping member pivot disposed between the two side walls, enabling the clamping member 140 to be pivoted between a clamped position and a non-clamped position, wherein the clamping member pivot is parallel to the clamping hook pivot 151; and a second elastic member 154, disposed between the clamping member 140 and the bracket 120 for biasing the clamping member 140 to the clamped position; when the clamping hook 110 is in the locked position and locks the crossbar, the clamping member 140 is blocked by the crossbar and is in the non-clamped position.

In an embodiment, the clamping member 140 has a clamping member abutting portion 144 at its free end 143, and the clamping hook 110 has a clamping hook abutting portion 116 corresponding to the clamping member abutting portion 144; when the clamping hook 110 is in the unlocked position and release the crossbar, the clamping member 140 is pivoted to the clamped position under biasing of the second elastic member 154, such that the clamping member abutting portion 144 and the clamping hook abutting portion 116 abut against each other, so as to further hold the clamping hook 110 in the unlocked position.

In an embodiment, when the clamping hook 110 is in the locked position, the first hook portion 111 of the clamping hook 110 protrudes forward onto the opening of the groove 121, so as to lock the crossbar in the groove 121.

In an embodiment, when the clamping hook 110 is in the unlocked position, the first hook portion 111 of the clamping hook 110 moves away from the opening of the groove 121 by pivoting of the clamping hook 110, thereby releasing the crossbar.

In an embodiment, the clamping hook 110 further has a second hook portion 112 being located between the clamping hook pivot 151 and the first hook portion 111 and having a same axial position in respect to the clamping hook pivot 151 as the first hook portion 111, the second hook portion 112 protrudes forward longer than the first hook portion 111, and with the first hook portion 111 forms a substantially C-shaped accommodating portion 113 for receiving the crossbar, and when the crossbar is placed in the accommodating portion 113, the crossbar pivots the clamping hook 110 from the unlocked position to the locked position by pressing against the second hook portion 112.

In an embodiment, the first hook portion 111 and the second hook portion 112 of the clamping hook 110 and the clamping hook abutting portion 116 of the clamping hook 110 are located at different axial positions in respect to the clamping hook pivot 151, and the clamping member abutting portion 144 and the clamping hook abutting portion 116 are located at a same axial position in respect to the clamping hook pivot 151.

In an embodiment, the engaging portion 118 is a pin hole for inserting a pin 152, and the other end of the first elastic member 153 is fixed on the pin 152.

In an embodiment, the bracket 120 is provided with a pin avoidance portion 126, such that moving of the pin 152 with pivoting of the clamping hook 110 is not interfered by the bracket 120.

In an embodiment, the clamping hook 110 is engaged with a sliding member 130, enabling a sliding of the sliding member 130 to bring the clamping hook 110 to move from the locked position to the unlocked position; and one end of the sliding member 130 opposite to the clamping hook 110 is connected to an operating member 156, and the operating member 156 is formed as a handle transverse to the sliding member 130, so as to permit a user to pull the sliding member 130 from the outside of the base 400 through the operating member 156.

**In** an embodiment, a third elastic member 155 is further disposed between the bracket 120 and the clamping hook 110, the third elastic member 155 is a torsion spring and is sleeved on the clamping hook pivot 151.

**In** an embodiment, the seating device further comprises a front crossbar 320, disposed on one of the base 400 and the seating portion; and a front clamping hook structure 200, disposed on the other of the base 400 and the seating portion, and capable of engaging with the front crossbar 320; wherein the front clamping hook structure 200 includes: a front bracket 220, fixed to the other of the base 400 and the seating portion 300, having two opposite side walls; a front clamping hook 210, pivotally connected to the front bracket 220, so as to be pivoted between a locked position and an unlocked position, when the front clamping hook 210 is in the locked position or the unlocked position, the front clamping hook 210 hooks or releases the front crossbar 320; and a fourth elastic member 253, disposed between the front bracket 220 and the front clamping hook 210, and the fourth elastic member 253 biases the front clamping hook 210 to its unlocked position.

In an embodiment, the rear clamping hook structure and the front clamping hook structure 200 are engaged with the same sliding member 130, and sliding of the sliding member 130 is able to simultaneously bring the clamping hook 110 and the front clamping hook 210 to be pivoted from their respective locked positions to their respective unlocking positions.

In an embodiment, in an assembled state, the front clamping hook structure 200 and the rear clamping hook structure 100 are respectively provided by two or more along extending directions of the front crossbar 320 and the rear crossbar 310, so as to respectively lock the front crossbar 320 and the rear crossbar 310.

In an embodiment, the seating portion 300 is a child car seat or a carrycot.

Although the application has been described with reference to several typical embodiments, the terms used are terms of description and illustration rather than limitation. Since the application can be embodied in various forms without departing from its spirit and essence, it should be understood, the above embodiments are not limited to any details described above, but should be interpreted in the broadest sense within the scope defined by the claims, and therefore all changes that fall within the scope of the claims or their equivalents should be covered by the claims.

### List of reference signs:

100 clamping hook structure
   110 clamping hook
      111 first hook portion
      112 second hook portion
      113 accommodating portion
      114 clamping hook pivot hole
      115 pin hole
      116 clamping hook abutting portion
      117 foot portion
      118 engaging portion
   120 bracket
      121 groove
      122 sliding member accommodating portion
      123 clamping hook pivot mounting hole
      124 clamping member pivot mounting hole
      125 first elastic member fixing portion
      126 pin avoidance portion
      127 bracket fixing portion
   130 sliding member
      131 dragging portion
   140 clamping member
      141 clamping member pivot hole
      142 pivot end
      143 free end
      144 clamping member abutting portion
   151 clamping hook pivot
   152 pin
   153 first elastic member
   154 second elastic member
   155 third elastic member
   156 operating member
200 front clamping hook structure
   210 front clamping hook
   220 front bracket
   253 fourth elastic member
300 seating portion
   310 rear crossbar
   320 front crossbar
400 base

## Claims

1. A clamping hook structure (100) for assembling and connecting a base (400) to a crossbar, the clamping hook structure (100) comprising:
a bracket (120), fixed to the base (400), having two opposite side walls;
a clamping hook (110), pivotally connected to the bracket (120) through a clamping hook pivot (151) disposed between the two side walls, so as to be pivoted between a locked position and an unlocked position, the clamping hook (110) has a first hook portion (111) and an engaging portion (118) located between the first hook portion (111) and the clamping hook pivot (151), when the clamping hook (110) is in the locked position or the unlocked position, the first hook portion (111) fixes or releases the crossbar; and
a first elastic member (153), one end of the first elastic member (153) is fixed to the bracket (120), and the other end of the first elastic member (153) is fixed to the engaging portion (118), **characterized in that** the first elastic member (153) is able to be displaced such that it can be located on either sides of an axis of the clamping hook pivot (151) as the clamping hook (110) is pivoted between the locked position and the unlocked position.

2. The clamping hook structure (100) according to claim 1, wherein the first elastic member (153) is a tension spring fixed to at least one of the side walls of the bracket (120).

3. The clamping hook structure (100) according to claim 1 or 2, wherein the two side walls of the bracket (120) are symmetrically arranged with each other, and a top of each side wall has a groove (121) opening upwards for accommodating the crossbar.

4. The clamping hook structure (100) according to any of claims 1 to 3, further comprising:
a clamping member (140), having a pivot end (142) and a free end (143), the pivot end (142) is pivotally connected to the bracket (120) through a clamping member (140) pivot disposed between the two side walls, enabling the clamping member (140) to be pivoted between a clamped position and a non-clamped position, wherein the clamping member (140) pivot is parallel to the clamping hook pivot (151); and
a second elastic member (154), disposed between the clamping member (140) and the bracket (120) for biasing the clamping member (140) to the clamped position;
when the clamping hook (110) is in the locked position and locks the crossbar, the clamping member (140) is blocked by the crossbar and is in the non-clamped position.

5. The clamping hook structure (100) according to claim 4 wherein:
the clamping member (140) has a clamping member abutting portion (144) at its free end (143), and the clamping hook (110) has a clamping hook abutting portion (116) corresponding to the clamping member abutting portion (144) when the clamping hook (110) is in the unlocked position and release the crossbar, the clamping member (140) is pivoted to the clamped position under biasing of the second elastic member (154), such that the clamping member abutting portion (144) and the clamping hook abutting portion (116) abut against each other, so as to further hold the clamping hook (110) in the unlocked position.

6. The clamping hook structure (100) according to any of claims 1 to 5, wherein:
when the clamping hook (110) is in the locked position, the first hook portion (111) of the clamping hook (110) protrudes forward onto the opening of the groove (121), so as to lock the crossbar in the groove (121); optionally
when the clamping hook (110) is in the unlocked position, the first hook portion (111) of the clamping hook (110) moves away from the opening of the groove (121) by pivoting of the clamping hook (110), thereby releasing the crossbar.

7. The clamping hook structure (100) according to any of claims 1 to 6, wherein:
the clamping hook (110) further has a second hook portion (112) being located between the clamping hook pivot (151) and the first hook portion (111) and having a same axial position in respect to the clamping hook pivot (151) as the first hook portion (111), the second hook portion (112) protrudes forward longer than the first hook portion (111), and forms with the first hook portion (111) forms a substantially C-shaped accommodating portion (113) for receiving the crossbar, and
when the crossbar is placed in the accommodating portion (113), the crossbar pivots the clamping hook (110) from the unlocked position to the locked position by pressing against the second hook portion (112).

8. The clamping hook structure (100) according to any of claims 1 to 7, wherein:
the first hook portion (111) and the second hook portion (112) of the clamping hook (110) and the clamping hook abutting portion (116) of the clamping hook (110) are located at different axial positions in respect to the clamping hook pivot (151), and the clamping member abutting portion (144) and the clamping hook abutting portion (116) are located at a same axial position in respect to the clamping hook pivot (151).

9. The clamping hook structure (100) according to any of claims 1 to 8, wherein:
the engaging portion (118) is a pin hole for inserting a pin (152), and the other end of the first elastic member (153) is fixed on the pin (152); optionally
the bracket (120) is provided with a pin avoidance portion (126), such that moving of the pin (152) with pivoting of the clamping hook (110) is not interfered by the bracket (120).

10. The clamping hook structure (100) according to any of claims 1 to 9, wherein:
the clamping hook (110) is engaged with a sliding member (130), enabling a sliding of the sliding member (130) to bring the clamping hook (110) to move from the locked position to the unlocked position; and
one end of the sliding member (130) opposite to the clamping hook (110) is connected to an operating member (156), and the operating member (156) is formed as a handle transverse to the sliding member (130), so as to permit a user to pull the sliding member (130) from the outside of the base (400) through the operating member (156).

11. The clamping hook structure (100) according to any of claims 1-10, wherein:
a third elastic member (155) is further disposed between the bracket (120) and the clamping hook (110), the third elastic member (155) is a torsion spring and is sleeved on the clamping hook pivot (151).

12. A seating device, comprising:
a base (400), fixed to a car;
a seating portion (300), detachably fixed to the base (400);
a rear crossbar (310), disposed on one of the base (400) and the seating portion (300); and
a rear clamping hook structure (100), respectively disposed on the other of the base (400) and the seating portion (300), and capable of engaging with the rear crossbar (310) wherein the rear clamping hook structure (100) is the clamping hook structure (100) according to any one of claims 1-11, and the crossbar is the rear crossbar (310).

13. The seating device according to claim 12, further comprising:
a front crossbar (320), disposed on one of the base (400) and the seating portion (300); and
a front clamping hook structure (100), disposed on the other of the base (400) and the seating portion (300), and capable of engaging with the front crossbar (320) wherein the front clamping hook structure (100) includes:
a front bracket (220), fixed to the other of the base (400) and the seating portion (300), having two opposite side walls;
a front clamping hook (210), pivotally connected to the front bracket (220), so as to be pivoted between a locked position and an unlocked position, when the front clamping hook (210) is in the locked position or the unlocked position, the front clamping hook (210) hooks or releases the front crossbar (320) ; and
a fourth elastic member (253), disposed between the front bracket (220) and the front clamping hook (210), and the fourth elastic member (253) biases the front clamping hook (210) to its unlocked position.

14. The seating device according to claim 12 or 13, wherein:
the rear clamping hook structure (200) and the front clamping hook structure (200) are engaged with the same sliding member (130), and sliding of the sliding member (130) is able to simultaneously bring the clamping hook (110) and the front clamping hook (210) to be pivoted from their respective locked positions to their respective unlocking positions.

15. The seating device according to any of claims 12 to 14, wherein:
in an assembled state, the front clamping hook structure (100) and the rear clamping hook structure (200) are respectively provided by two or more along extending directions of the front crossbar (320) and the rear crossbar (310), so as to respectively lock the front crossbar (320) and the rear crossbar (310); optionally
the seating portion (300) is a child car seat or a carrycot.

## Patentansprüche

1. Klemmhakenstruktur (100) zum Montieren und Verbinden einer Basis (400) mit einer Querstange, wobei die Klemmhakenstruktur (100) Folgendes umfasst:
eine Halterung (120), die an der Basis (400) fixiert ist und zwei gegenüberliegende Seitenwände aufweist;
einen Klemmhaken (110), der über einen zwischen den zwei Seitenwänden angeordneten Klemmhaken-Schwenkzapfen (151) schwenkbar mit der Halterung (120) verbunden ist, sodass er zwischen einer verriegelten Position und einer entriegelten Position geschwenkt werden kann, wobei der Klemmhaken (110) einen ersten Hakenabschnitt (111) und einen Eingriffsabschnitt (118) aufweist, der sich zwischen dem ersten Hakenabschnitt (111) und dem Klemmhaken-Schwenkzapfen (151) befindet, wenn sich der Klemmhaken (110) in der verriegelten Position oder der entriegelten Position befindet, der erste Hakenabschnitt (111) die Querstange fixiert oder freigibt; und
ein erstes elastisches Element (153), wobei ein Ende des ersten elastischen Elements (153) an der Halterung (120) fixiert ist und das andere Ende des ersten elastischen Elements (153) an dem Eingriffsabschnitt (118) fixiert ist, **dadurch gekennzeichnet, dass** das erste elastische Element (153) so verschoben werden kann, dass es sich auf beiden Seiten einer Achse des Klemmhaken-Schwenkzapfens (151) befinden kann, wenn der Klemmhaken (110) zwischen der verriegelten Position und der entriegelten Position geschwenkt wird.

2. Klemmhakenstruktur (100) nach Anspruch 1, wobei das erste elastische Element (153) eine Spannfeder ist, die an mindestens einer der Seitenwände der Halterung (120) fixiert ist.

3. Klemmhakenstruktur (100) nach Anspruch 1 oder 2, wobei die zwei Seitenwände der Halterung (120) symmetrisch zueinander angeordnet sind und eine Oberseite jeder Seitenwand eine nach oben offene Nut (121) zur Aufnahme der Querstange aufweist.

4. Klemmhakenstruktur (100) nach einem der Ansprüche 1 bis 3, des Weiteren umfassend:
ein Klemmelement (140), das ein Schwenkende (142) und ein freies Ende (143) aufweist, wobei das Schwenkende (142) über einen zwischen den zwei Seitenwänden angeordneten Schwenkzapfen des Klemmelements (140) schwenkbar mit der Halterung (120) verbunden ist, wodurch das Klemmelement (140) zwischen einer geklemmten Position und einer nicht-geklemmten Position geschwenkt werden kann, wobei der Schwenkzapfen des Klemmelements (140) parallel zu dem Klemmhaken-Schwenkzapfen (151) verläuft; und
ein zweites elastisches Element (154), das zwischen dem Klemmelement (140) und der Halterung (120) angeordnet ist, um das Klemmelement (140) in die geklemmte Position vorzuspannen;
wenn sich der Klemmhaken (110) in der verriegelten Position befindet und die Querstange verriegelt, das Klemmelement (140) durch die Querstange blockiert wird und sich in der nicht-geklemmten Position befindet.

5. Klemmhakenstruktur (100) nach Anspruch 4, wobei:
das Klemmelement (140) an seinem freien Ende (143) einen Klemmelement-Anlageabschnitt (144) aufweist, und der Klemmhaken (110) einen Klemmhaken-Anlageabschnitt (116) aufweist, der dem Klemmelement-Anlageabschnitt (144) entspricht, wenn sich der Klemmhaken (110) in der entriegelten Position befindet und die Querstange freigibt, das Klemmelement (140) unter der Vorspannung des zweiten elastischen Elements (154) in die geklemmte Position geschwenkt wird, sodass der Klemmelement-Anlageabschnitt (144) und der Klemmhaken-Anlageabschnitt (116) aneinander anliegen, um den Klemmhaken (110) weiter in der entriegelten Position zu halten.

6. Klemmhakenstruktur (100) nach einem der Ansprüche 1 bis 5, wobei:
wenn sich der Klemmhaken (110) in der verriegelten Position befindet, der erste Hakenabschnitt (111) des Klemmhakens (110) nach vorne in die Öffnung der Nut (121) vorsteht, um die Querstange in der Nut (121) zu verriegeln; optional
wenn sich der Klemmhaken (110) in der entriegelten Position befindet, sich der erste Hakenabschnitt (111) des Klemmhakens (110) durch Schwenken des Klemmhakens (110) von der Öffnung der Nut (121) weg bewegt, wodurch die Querstange freigegeben wird.

7. Klemmhakenstruktur (100) nach einem der Ansprüche 1 bis 6, wobei:
der Klemmhaken (110) des Weiteren einen zweiten Hakenabschnitt (112) aufweist, der sich zwischen dem Klemmhaken-Schwenkzapfen (151) und dem ersten Hakenabschnitt (111) befindet und in Bezug auf den Klemmhaken-Schwenkzapfen (151) eine gleiche axiale Position einnimmt wie der erste Hakenabschnitt (111), der zweite Hakenabschnitt (112) länger nach vorne vorsteht als der erste Hakenabschnitt (111) und mit dem ersten Hakenabschnitt (111) einen im Wesentlichen C-förmigen Aufnahmeabschnitt (113) zum Aufnehmen der Querstange bildet, und
wenn die Querstange in dem Aufnahmeabschnitt (113) platziert ist, die Querstange den Klemmhaken (110) durch Druck auf den zweiten Hakenabschnitt (112) aus der entriegelten Position in die verriegelte Position schwenkt.

8. Klemmhakenstruktur (100) nach einem der Ansprüche 1 bis 7, wobei: der erste Hakenabschnitt (111) und der zweite Hakenabschnitt (112) des Klemmhakens (110) und der Klemmhaken-Anlageabschnitt (116) des Klemmhakens (110) sich in Bezug auf den Klemmhaken-Schwenkzapfen (151) an unterschiedlichen axialen Positionen befinden, und der Klemmelement-Anlageabschnitt (144) und der Klemmhaken-Anlageabschnitt (116) sich in Bezug auf den Klemmhaken-Schwenkzapfen (151) an einer gleichen axialen Position befinden.

9. Klemmhakenstruktur (100) nach einem der Ansprüche 1 bis 8, wobei:
der Eingriffsabschnitt (118) ein Stiftloch zum Einsetzen eines Stifts (152) ist, und das andere Ende des ersten elastischen Elements (153) an dem Stift (152) fixiert ist; optional
die Halterung (120) mit einem Stiftumgehungsabschnitt (126) versehen ist, sodass die Bewegung des Stifts (152) beim Schwenken des Klemmhakens (110) nicht durch die Halterung (120) behindert wird.

10. Klemmhakenstruktur (100) nach einem der Ansprüche 1 bis 9, wobei:
der Klemmhaken (110) mit einem Gleitelement (130) in Eingriff steht, wodurch ein Gleiten des Gleitelements (130) ermöglicht wird, um den Klemmhaken (110) aus der verriegelten Position in die entriegelte Position zu bewegen; und
ein dem Klemmhaken (110) gegenüberliegendes Ende des Gleitelements (130) mit einem Betätigungselement (156) verbunden ist und das Betätigungselement (156) als ein Griff quer zu dem Gleitelement (130) ausgebildet ist, so dass ein Benutzer das Gleitelement (130) von der Außenseite der Basis (400) durch das Betätigungselement (156) ziehen kann.

11. Klemmhakenstruktur (100) nach einem der Ansprüche 1 bis 10, wobei:
ein drittes elastisches Element (155) des Weiteren zwischen der Halterung (120) und dem Klemmhaken (110) angeordnet ist, das dritte elastische Element (155) eine Torsionsfeder ist und auf den Klemmhaken-Schwenkzapfen (151) aufgesteckt ist.

12. Sitzvorrichtung, umfassend:
eine Basis (400), die an einem Fahrzeug fixiert ist;
einen Sitzabschnitt (300), der abnehmbar an der Basis (400) fixiert ist;
eine hintere Querstange (310), die an einem von der Basis (400) und dem Sitzabschnitt (300) angeordnet ist; und
eine hintere Klemmhakenstruktur (100), die jeweils an dem anderen von der Basis (400) und dem Sitzabschnitt (300) angeordnet ist und die mit der hinteren Querstange (310) in Eingriff kommen kann, wobei die hintere Klemmhakenstruktur (100) die Klemmhakenstruktur (100) nach einem der Ansprüche 1 bis 11 ist und die Querstange die hintere Querstange (310) ist.

13. Sitzvorrichtung nach Anspruch 12, des Weiteren umfassend:
eine vordere Querstange (320), die an einem von der Basis (400) und dem Sitzabschnitt (300) angeordnet ist; und
eine vordere Klemmhakenstruktur (100), die an dem anderen von der Basis (400) und dem Sitzabschnitt (300) angeordnet ist und mit der vorderen Querstange (320) in Eingriff kommen kann, wobei die vordere Klemmhakenstruktur (100) Folgendes beinhaltet:
eine vordere Halterung (220), die an dem anderen von der Basis (400) und dem Sitzabschnitt (300) fixiert ist und zwei gegenüberliegende Seitenwände aufweist;
einen vorderen Klemmhaken (210), der schwenkbar mit der vorderen Halterung (220) verbunden ist, sodass er zwischen einer verriegelten Position und einer entriegelten Position geschwenkt werden kann, wenn sich der vordere Klemmhaken (210) in der verriegelten oder der entriegelten Position befindet, der vordere Klemmhaken (210) die vordere Querstange (320) einhakt oder freigibt; und
ein viertes elastisches Element (253), das zwischen der vorderen Halterung (220) und dem vorderen Klemmhaken (210) angeordnet ist, und das vierte elastische Element (253) den vorderen Klemmhaken (210) in seine entriegelte Position vorspannt.

14. Sitzvorrichtung nach Anspruch 12 oder 13, wobei:
die hintere Klemmhakenkonstruktion (200) und die vordere Klemmhakenkonstruktion (200) mit dem gleichen Gleitelement (130) in Eingriff stehen, und das Gleiten des Gleitelements (130) gleichzeitig den Klemmhaken (110) und den vorderen Klemmhaken (210) aus ihren jeweiligen verriegelten Positionen in ihre jeweiligen entriegelten Positionen schwenken kann.

15. Sitzvorrichtung nach einem der Ansprüche 12 bis 14, wobei:
in einem montierten Zustand die vordere Klemmhakenkonstruktion (100) und die hintere Klemmhakenkonstruktion (200) jeweils in zwei oder mehr Erstreckungsrichtungen der vorderen Querstange (320) und der hinteren Querstange (310) vorgesehen sind, um jeweils die vordere Querstange (320) und die hintere Querstange (310) zu arretieren; optional
der Sitzabschnitt (300) ein Kindersitz oder eine Babytrageschale ist.

## Revendications

1. Structure de crochet de serrage (100) pour assembler une base (400) sur une barre transversale et pour la connecter à cette même barre transversale, la structure de crochet de serrage (100) comprenant :
une console de support (120), fixée à la base (400), qui comporte deux parois latérales opposées ;
un crochet de serrage (110), connecté de façon pivotante à la console de support (120) par l'intermédiaire d'un axe de pivotement de crochet de serrage (151) disposé entre les deux parois latérales de telle sorte qu'il puisse être pivoté entre une position verrouillée et une position déverrouillée, le crochet de serrage (110) comportant une première partie de crochet (111) et une partie d'engagement (118) située entre la première partie de crochet (111) et l'axe de pivotement de crochet de serrage (151), et lorsque le crochet de serrage (110) est dans la position verrouillée ou dans la position déverrouillée, la première partie de crochet (111) fixe la barre transversale ou la libère ; et
un premier élément élastique (153), une extrémité du premier élément élastique (153) étant fixée à la console de support (120) et l'autre extrémité du premier élément élastique (153) étant fixée à la partie d'engagement (118), **caractérisée en ce que** le premier élément élastique (153) peut être déplacé de telle sorte qu'il puisse être situé sur l'un ou l'autre côté d'un axe de l'axe de pivotement de crochet de serrage (151) lorsque le crochet de serrage (110) est pivoté entre la position verrouillée et la position déverrouillée.

2. Structure de crochet de serrage (100) selon la revendication 1, dans laquelle le premier élément élastique (153) est un ressort de traction qui est fixé à au moins l'une des parois latérales de la console de support (120).

3. Structure de crochet de serrage (100) selon la revendication 1 ou 2, dans laquelle les deux parois latérales de la console de support (120) sont disposées de façon symétrique l'une par rapport à l'autre, et une partie supérieure de chaque paroi latérale comporte une rainure (121) ouverte vers le haut pour loger la barre transversale.

4. Structure de crochet de serrage (100) selon l'une quelconque des revendications 1 à 3, comprenant en outre :
un élément de serrage (140) qui comporte une extrémité de pivotement (142) et une extrémité libre (143), l'extrémité de pivotement (142) étant connectée de façon pivotante à la console de support (120) par l'intermédiaire d'un axe de pivotement de l'élément de serrage (140) qui est disposé entre les deux parois latérales, ce qui permet que l'élément de serrage (140) soit pivoté entre une position serrée et une position non serrée, dans laquelle l'axe de pivotement de l'élément de serrage (140) est parallèle à l'axe de pivotement de crochet de serrage (151) ; et
un deuxième élément élastique (154) qui est disposé entre l'élément de serrage (140) et la console de support (120) pour solliciter par poussée l'élément de serrage (140) pour l'amener dans la position serrée ;
lorsque le crochet de serrage (110) est dans la position verrouillée et qu'il verrouille la barre transversale, l'élément de serrage (140) est bloqué par la barre transversale et est dans la position non serrée.

5. Structure de crochet de serrage (100) selon la revendication 4, dans laquelle :
l'élément de serrage (140) comporte, au niveau de son extrémité libre (143), une partie de venue en butée d'élément de serrage (144) et le crochet de serrage (110) comporte une partie de venue en butée de crochet de serrage (116) qui est en correspondance avec la partie de venue en butée d'élément de serrage (144) lorsque le crochet de serrage (110) est dans la position déverrouillée et qu'il libère la barre transversale, l'élément de serrage (140) pivotant en direction de la position serrée sous l'effet de la sollicitation par poussée exercée par le deuxième élément élastique (154) de telle sorte que la partie de venue en butée d'élément de serrage (144) et la partie de venue en butée de crochet de serrage (116) viennent en butée l'une contre l'autre, de manière à maintenir davantage le crochet de serrage (110) dans la position déverrouillée.

6. Structure de crochet de serrage (100) selon l'une quelconque des revendications 1 à 5, dans laquelle :
lorsque le crochet de serrage (110) est dans la position verrouillée, la première partie de crochet (111) du crochet de serrage (110) fait saillie vers l'avant dans l'ouverture de la rainure (121) de manière à verrouiller la barre transversale dans la rainure (121) ; en option,
lorsque le crochet de serrage (110) est dans la position déverrouillée, la première partie de crochet (111) du crochet de serrage (110) est éloignée de l'ouverture de la rainure (121) par pivotement du crochet de serrage (110), ce qui libère la barre transversale.

7. Structure de crochet de serrage (100) selon l'une quelconque des revendications 1 à 6, dans laquelle :
le crochet de serrage (110) comporte en outre une seconde partie de crochet (112) qui est située entre l'axe de pivotement de crochet de serrage (151) et la première partie de crochet (111) et qui présente, par rapport à l'axe de pivotement de crochet de serrage (151), une même position axiale que la première partie de crochet (111), la seconde partie de crochet (112) faisant davantage saillie vers l'avant que la première partie de crochet (111) et formant, avec la première partie de crochet (111), une partie de logement (113) sensiblement en forme de C destinée à recevoir la barre transversale, et
lorsque la barre transversale est placée dans la partie de logement (113), la barre transversale fait pivoter le crochet de serrage (110) de la position déverrouillée à la position verrouillée en appuyant contre la seconde partie de crochet (112).

8. Structure de crochet de serrage (100) selon l'une quelconque des revendications 1 à 7, dans laquelle : la première partie de crochet (111) et la seconde partie de crochet (112) du crochet de serrage (110) ainsi que la partie de venue en butée de crochet de serrage (116) du crochet de serrage (110) sont situées au niveau de positions axiales différentes par rapport à l'axe de pivotement de crochet de serrage (151), et la partie de venue en butée d'élément de serrage (144) et la partie de venue en butée de crochet de serrage (116) sont situées au niveau d'une même position axiale par rapport à l'axe de pivotement de crochet de serrage (151).

9. Structure de crochet de serrage (100) selon l'une quelconque des revendications 1 à 8, dans laquelle :
la partie d'engagement (118) est un trou de goupille à l'intérieur duquel une goupille (152) est destinée à être insérée, et l'autre extrémité du premier élément élastique (153) est fixée à la goupille (152) ; en option,
la console de support (120) comporte une partie d'évitement de goupille (126) de telle sorte que le déplacement de la goupille (152) lors du pivotement du crochet de serrage (110) n'interfère pas avec la console de support (120).

10. Structure de crochet de serrage (100) selon l'une quelconque des revendications 1 à 9, dans laquelle :
le crochet de serrage (110) est engagé avec un élément coulissant (130), ce qui permet un coulissement de l'élément coulissant (130) afin d'amener le crochet de serrage (110) à passer de la position verrouillée à la position déverrouillée ; et
une extrémité de l'élément coulissant (130) opposée au crochet de serrage (110) est connectée à un élément d'actionnement (156), et l'élément d'actionnement (156) est conçu selon la forme d'une poignée qui est transversale par rapport à l'élément coulissant (130), de manière à permettre à un utilisateur de tirer l'élément coulissant (130) depuis l'extérieur de la base (400) par l'intermédiaire de l'élément d'actionnement (156).

11. Structure de crochet de serrage (100) selon l'une quelconque des revendications 1 à 10, dans laquelle :
un troisième élément élastique (155) est en outre disposé entre la console de support (120) et le crochet de serrage (110), le troisième élément élastique (155) étant un ressort de torsion et étant monté autour de l'axe de pivotement de crochet de serrage (151).

12. Dispositif de siège comprenant :
une base (400), fixée à un véhicule automobile ;
une partie de siège (300), fixée de façon amovible à la base (400) ;
une barre transversale arrière (310), disposée sur un élément constitutif parmi la base (400) et la partie de siège (300) ; et
une structure de crochet de serrage arrière (100), respectivement disposée sur l'autre élément constitutif parmi la base (400) et la partie de siège (300) et pouvant être engagée avec la barre transversale arrière (310), dans lequel la structure de crochet de serrage arrière (100) est la structure de crochet de serrage (100) selon l'une quelconque des revendications 1 à 11, et la barre transversale est la barre transversale arrière (310).

13. Dispositif de siège selon la revendication 12, comprenant en outre :
une barre transversale avant (320), disposée sur un élément constitutif parmi la base (400) et la partie de siège (300) ; et
une structure de crochet de serrage avant (100), disposée sur l'autre élément constitutif parmi la base (400) et la partie de siège (300) et pouvant être engagée avec la barre transversale avant (320), dans lequel la structure de crochet de serrage avant (100) comprend :
une console de support avant (220), fixée à l'autre élément constitutif parmi la base (400) et la partie de siège (300), comportant deux parois latérales opposées ;
un crochet de serrage avant (210), connecté de façon pivotante à la console de support avant (220), de manière à pouvoir être pivoté entre une position verrouillée et une position déverrouillée, lorsque le crochet de serrage avant (210) est dans la position verrouillée ou dans la position déverrouillée, le crochet de serrage avant (210) crochetant ou libérant la barre transversale avant (320) ; et
un quatrième élément élastique (253), disposé entre la console de support avant (220) et le crochet de serrage avant (210), le quatrième élément élastique (253) sollicitant par poussée le crochet de serrage avant (210) pour l'amener dans sa position déverrouillée.

14. Dispositif de siège selon la revendication 12 ou 13, dans lequel :
la structure de crochet de serrage arrière (200) et la structure de crochet de serrage avant (200) sont engagées avec le même élément coulissant (130), et le coulissement de l'élément coulissant (130) permet de faire en sorte, de façon simultanée, que le crochet de serrage (110) et le crochet de serrage avant (210) pivotent depuis leurs positions verrouillées respectives pour qu'ils prennent leurs positions déverrouillées respectives.

15. Dispositif de siège selon l'une quelconque des revendications 12 à 14, dans lequel :
dans un état assemblé, la structure de crochet de serrage avant (100) et la structure de crochet de serrage arrière (200) sont respectivement prévues en deux exemplaires ou plus suivant des directions d'extension de la barre transversale avant (320) et de la barre transversale arrière (310), de manière à verrouiller respectivement la barre transversale avant (320) et la barre transversale arrière (310) ; en option,
la partie de siège (300) est un siège auto pour enfant ou une nacelle.
